# EUROPÄISCHE PATENTSCHRIFT

(11) **EP 2 716 436 B1**
(45) Veröffentlichungstag und Bekanntmachung des Hinweises auf die Patenterteilung: **18.03.2020**
(21) Anmeldenummer: 12187227.9
(22) Anmeldetag: 04.10.2012
(51) Int. Cl.: B29C 70/88, B29C 70/02, B29L 9/00

(54) **Kohlenstoffverbundbauteil**
Carbon composite component
Composant composite en carbone

(43) Veröffentlichungstag der Anmeldung: 09.04.2014
(73) Patentinhaber: Magna Steyr Fahrzeugtechnik AG & Co KG, 8041 Graz (AT)
(72) Erfinder: Hofer, Bernhard, 8053 Graz (AT); Zachnegger, Harald, 8041 Graz (AT)
(74) Vertreter: Rausch, Gabriele

(56) Entgegenhaltungen:
- EP-A1- 1 584 451
- WO-A1-92/18329
- WO-A1-2005/118263
- US-A1- 2010 103 582
- US-A1- 2011 031 350

## Beschreibung

Die Erfindung betrifft ein Kohlenstoffverbundbauteil aus Kunststoff- Karbonfaser-Verbundwerkstoff, der aus einzelnen Bereichen zusammengesetzt ist, in denen zumindest eine Lage in zumindest einem Bereich aus Kohlenstofffasern besteht und wobei mindestens ein weiterer und/oder derselbe Bereich eine Lage enthält, die aus Metallseilen besteht, die in mindestens einer Richtung beabstandet zueinander angeordnet sind.

### Stand der Technik

Ein Verbundwerkstoff ist eine Kombination von mindestens zwei oder mehreren verschiedenen Wirkstoffen, welche eindeutig unterschiedliche physikalische oder chemische Eigenschaften besitzen. Der daraus entstehende Verbundwerkstoff vereinigt die physikalischen und/oder chemischen Eigenschaften seiner Bestandteile. Gleichzeitig werden die positiven Eigenschaften für die jeweilige Anwendung hervorgehoben und die am wenigsten erwünschten Eigenschaften unterdrückt. Die Komponenten werden dabei so ausgewählt und miteinander verbunden, dass jeder Stoff in seinen speziellen und für den vorliegenden Fall benötigten Eigenschaften beansprucht wird.

Auch in der Automobilindustrie wird zunehmend Kohlenstoff-Verbundwerkstoff für Leichtbaukomponenten eingesetzt. Durch das geringe Gewicht des Verbundmaterials wird dadurch die Gewichtszunahme im Automobilbau kompensiert. Vor allem für den Einsatz in sicherheitsrelevanten Bereichen zum Beispiel als verstärkter Aufprallträger werden Kohlenstoffverbund-Materialien eingesetzt.

So ist aus der EP 1483137B1 ein Aufprallträger bekannt, der mit einem Metall-Schnurband verstärkt ist, wobei die Metallschnüre oder Drähte in einer oder mehreren Ebenen angeordnet sind. Diese Metallschnüre sind dabei zwischen Folien aus Polymermaterial laminiert. Für die Herstellung des Aufprallschutzes ist eine regelmäßige Ausrichtung der Metallschnüre sinnvoll, aber das Verbundmaterial Metall-Kunststoff ist für die Aufnahme von Kräften nicht optimal ausgelegt.

Aus der GB2041824 ist ein Verbundmaterial aus Kohlestofffaser- verstärktem Kunststoff in Kombination mit Metalldrahtgewebe bekannt. Dabei ist das Verbundmaterial alternierend aus dem verstärkten Kunststoff und dem Metallgelege aufgebaut.

Ein solcher Aufbau ist für den Einsatz für homogene Bauteile mit gleichmäßigem Verhalten gegenüber Krafteinträgen sinnvoll.

Die WO 2005/118263 A1 offenbart ein Textilprodukt, umfassend mindestens eine Schicht aus nichtmetallischen Fasern, wobei das Textilprodukt Metallseile umfasst, wobei die Metallseile mittels Nähten mit der mindestens einen Schicht aus nichtmetallischen Fasern verbunden sind.

US 2010/103582 A1 offenbart ein Blitzschutzsystem, umfassend eine Kunststoffschicht; eine Metallfolienschicht, die damit zumindest teilweise übereinander angeordnet ist, und ein Matrixmaterial, das zumindest teilweise mit der Kunststoffschicht und der Metallfolienschicht in Kontakt steht.

Die vorliegende Erfindung löst die Aufgabe, ein Bauteil aus einen Verbundwerkstoff herzustellen, das durch Einteilung in unterschiedliche Bereiche zusätzlich zu den unterschiedlichen Lagen des Verbundwerkstoffs selbst unterschiedliche Eigenschaften, verteilt über Bereiche des Bauteils aufweist.

Diese Aufgabe wird gelöst durch ein Kohlenstoffverbund-Bauteil nach Anspruch 1 aus Kunststoff-Kohlestoff-Faserverbundwerkstoff bestehend aus einzelnen Bereichen, in denen zumindest eine Lage in zumindest einem Bereich aus Kohlenstofffaserverbundmaterial besteht und mindestens ein weiterer Bereich eine Lage enthält, die aus Metallseilen verstärktem Kunststoff besteht. Erfindungsgemäß sind die Metallseile mindestens in einer Richtung in Abstände voneinander angeordnet. Erfindungsgemäß werden auf oder zwischen die Kohlenstofffaserlagen Lagen aus Metallseilen angeordnet. Erfindungsgemäß weist das Bauteil unterschiedliche Bereiche auf, wobei in einem ersten Bereich des Bauteils nur Lagen von Kohlenstofffasernverbundmaterial vorhanden sind, wobei in einem zweiten Bereich das Bauteil zwei Lagen von Metallseilen aufweist und/oder in einem dritten Bereich das Bauteil eine Lage mit einem Metallseil aufweist, wobei die Metallseile ein bidirektionales Metallgelege bilden.

Erfindungsgemäß werden die Metallseile zu einem bidirektionalen Metallgelege verbunden, beispielsweise verwoben. Dadurch wird die Elastizität nicht nur in einer Richtung erhöht und das Bauteil kann insgesamt optimiert werden.

Es ist dabei von Vorteil Metallseile, d.h. mehr als einen einzelnen Draht zu verwenden und diese mindestens zwei Drähte zu einem Metallseil zu verdrillen oder zu verseilen und/oder zu flechten. Erst durch das Verseilen erhält das Metallseil seine typische Elastizität und Steckfähigkeit über die Metalleigenschaften eines einzelnen Drahtes hinaus.

Gerade durch die Verbindung des Kohlenstoffverbundmaterials mit den Metallseilen wird die gewünschte Elastizität des Bauteils erreicht, die zum Beispiel für sicherheitsrelevante Bauteile im Aufprallschutz verwendet werden. Die Verseilung des Metalldrahtes zu Metallseilen führt zu einer erhöhten Elastizität, die eine ideale Ergänzung zu dem spröden Material des Kohlenstoffverbund-Kunststoffs ist.

Vorteilhafterweise wird die Elastizität des Materials durch die Verwendung von Stahl für die Metallseile erhöht.

Für den Aufbau des Kohlenstoffverbundbauteils ist es von Vorteil, dass sich die Metallseile zwischen oder auch auf den kohlefaserverstärkten Lagen des Kohlenstoffverbundbauteils befinden. Dadurch kann die Eigenschaft des Verbundmaterials optimiert werden, da eine hohe Flexibilität für die Positionierung der Metallseile vorhanden ist.

Weiterhin ist es von Vorteil, dass bei der Verwendung von Stahlseilen als Metallseile eine Lage aus isolierendem Material zwischen den Metallseilen und den Kohlenstofffasern vorhanden ist, um die Korrosion zu minimieren.

Dabei kann vorteilhafterweise das isolierende Material eine Lage aus Kunststoff der Kunststoffverbundmatrix sein. Alternativ dazu ist es von Vorteil glasfaserverstärkten Kunststoff zu verwenden, der sowohl als isolierende Lage verwendet wird, aber auch die Plastizität des Verbundes erhöht und dem spröden Verhalten der Kohlestofflagen entgegenwirkt. Bei Verwendung von Glasfaser verstärktem Kunststoff können Bauteile und Strukturen hergestellt werden, deren Struktur bei einem Aufprall eher erhalten bleibt und bei denen die Lagen aus Metallseilen vor Korrosion geschützt sind.

Durch die Integration der Metallseile in das Kohlenstoffverbundbauteil ist es vorteilhafterweise möglich, metallische Verbindungselemente zu integrieren. Die metallischen Verbindungselemente dienen dabei einerseits zur Verbindung der Bauteile mit weiteren Bauteilen beispielsweise an einer Fahrzeugkarosserie, aber auch zur Anbindung des Bauteils an die elektrische Masse des Fahrzeugs.

Gerade die Anbindung an die elektrische Masse ist ein Problem, das bei Fahrzeugen mit geringem Metallanteil auftritt. Für solche Fahrzeuge wäre dann das Verlegen von zusätzlichen Masseleitungen eingespart. Durch den Einbau von Metallgelegen in den Verbund wird die elektromagnetische Verträglichkeit des Gesamtfahrzeugs ebenfalls verbessert. Durch die Verwendung solcher Metallgelege in den Kohlenstoffverbundbauteilen wird wiederum ein Faraday'scherKäfig hergestellt, so dass eine Schirmung wie in einem konventionellen Fahrzeug aus Blechen ermöglicht wird. Für die Herstellung von Kunststoffverbundbauteilen ist es weiterhin von Vorteil, wenn das Metallgelege einen Kern bildet, um den herum das Bauteil durch Aufbringen von weiteren Lagen, isolierender oder nicht isolierender Art, aus Glasfaser- und/oder Kohlenstofffaser-verstärkten Lagen hergestellt werden.

### Beschreibung der Erfindung

Die Erfindung wird in den Zeichnungen beispielhaft dargestellt und in der nachfolgenden Beschreibung erläutert.

Es zeigt:
Fig.1 ein beispielhaftes Bauteil
Figur 2 eine schematische Darstellung der Metallgelege
Figur 3 ein weiteres beispielhaftes dreidimensionales Bauteil
Figur 4 eine Bauteil mit Isolationslagen.

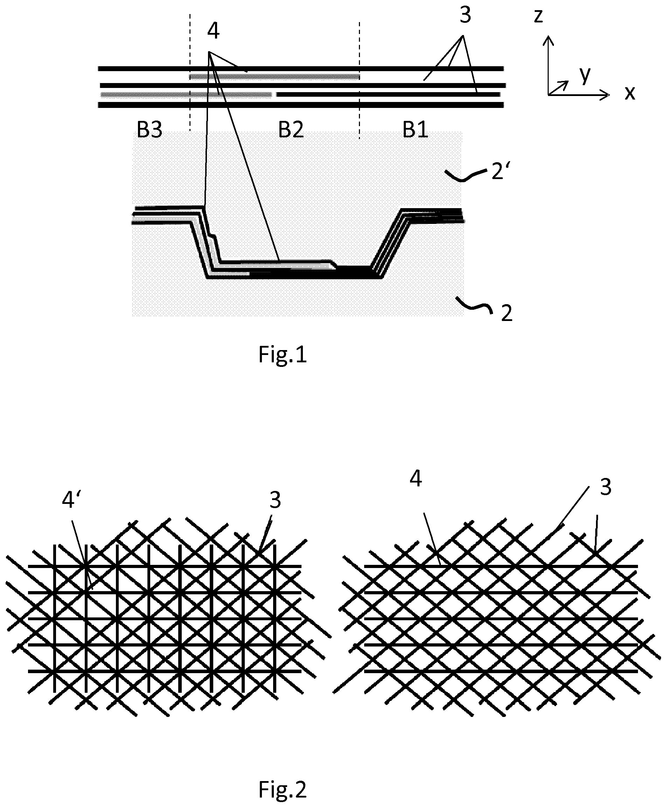

Figur 1 oben zeigt einen beispielhaften Aufbau von Lagen nach dem erfindungsgemäßen Gegenstand. Die Lagen werden auf einer planen Fläche vorbereitet. Im Beispiel der Figur 1 sind unterschiedliche vorimprägnierte Faserlagen aus Kohlenstofffaser 3 vorgesehen. Diese vorimprägniert Faserlagen werden als Prepreg bezeichnet und bestehen aus Fasern und einer ungehärteten duroplastischen Kunststoffmatrix.

Auf oder zwischen die Kohlenstofffaserlagen 3 werden Lagen 4 aus Metallseilen angeordnet. Wie aus dem Beispiel zu erkennen ist, weist das Bauteil unterschiedliche Bereiche B1, B2, B3 auf. Diese Bereiche sind in der x, y Ebene definiert, nicht in der Schichtebene z des Bauteils. Die Bereiche können unterschiedlich groß sein und unterschiedliche Formen in der x,y-Ebene aufweisen. Im Bereich B1 des Bauteils sind nur Lagen von Kohlenstofffasernverbundmaterial vorhanden. Im Bereich B2 weist das Bauteil zwei Lagen von Metallseilen auf, im Bereich B3 eine Lage mit einem Metallgelege. Auf eine erste Lage aus Kohlenstofffasernverbundmaterial wird eine zweite Lage, in diesem Fall alternativ eine Lage Kohlenstofffasernverbundmaterial oder einem Metallgelege aufgelegt. Je nach Beanspruchung der einzelnen Bereiche B1, B2, B3 werden Metallgelege oder weitere Lagen aus Kohlenstofffasernverbundmaterial aufeinander geschichtet. Dieser Prozess der Schichtung der vorgefertigten Metallgelege und von faserverstärkten Stücken kann automatisiert ablaufen.

Im unteren Teil der Figur 1 ist ein Werkzeug aufgezeigt, dass ein unteres Werkzeugteil 2 und ein oberes Werkzeugteil 2' aufweist. In diesem Werkzeug 2, 2' wird das vorbereitetet Bauteil 1 verformt und entweder in einem Autoklaven ausgehärtet oder mithilfe von RTM- Verfahren mit einer Formmasse verpresst und unter Wärme und Druck ausgehärtet.

Figur 2 zeigt eine beispielhafte Anordnung von Prepregs. Das kohlefaserverstärkte Material 3 ist in diesem Fall ein gleichmäßiges Gewebe aus Kohlenstofffasern. Allerdings ist für die Ausführung der Erfindung auch ein Einsatz von kohlenstofffaserverstärktem Material denkbar, in dem die Kohlenstofffasern eine bevorzugte Richtung haben. Auf der rechten Seite der Figur 2 ist das Metallseil 4 horizontal ausgerichtet. Es handelt sich dabei um Metallseile, die aus mindestens zwei Drähten, die umeinander verdrillt sind, hergestellt werden. Diese Metallseile, die aus Drähten zusammen gebündelt werden, sind in diesem Beispiel beabstandet voneinander parallel verlegt. Auf der linken Seite der Abbildung 2 sind die Metallseile senkrecht zu den horizontalen Anordnungen weiterer Metallseile angeordnet und bilden ein Metallseilgitter als Metallgelege, das als Ganzes in das Bauteil 1 eingelegt wird.

Die in diesem Beispiel gezeigte Anordnung der Metallseile ist nur eine mögliche Ausführungsform. Die Metallseile können ein Metallgelege bilden, das an einem Punkt durch dichteres Legen der Metallseile verstärkt, an anderen Stellen durch ein lockeres Legen schwächer ausgelegt ist. Auch eine Parallelität der Metallseile ist nicht notwendig.

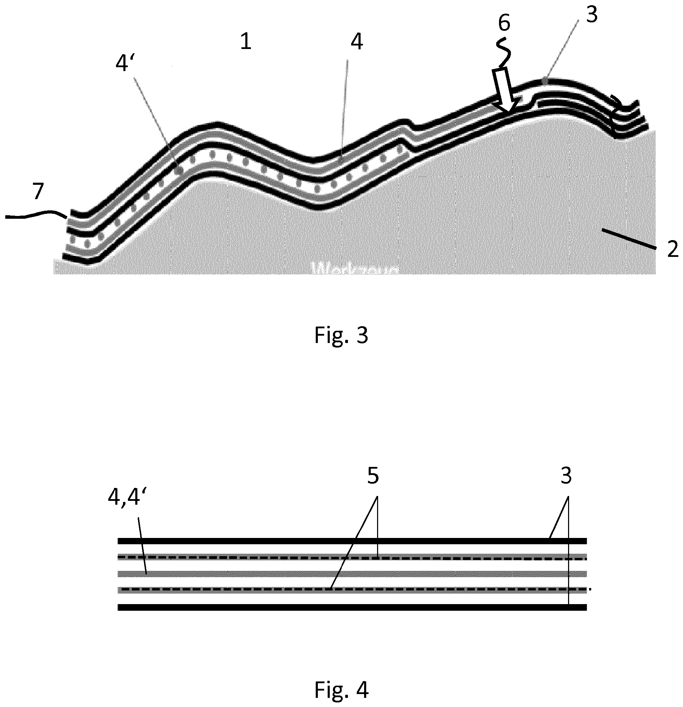

Figur 3 zeigt ein weiteres Bauteil 1, das auf der Oberfläche eine unteren Werkzeugteiles 2 aufgebaut wird. Das Bauteil 1 besteht wiederum aus unterschiedlichen alternierend in Lagen aus kohlefaserverstärkten Lagen 3 oder unidirektionalen Metallseilen 4 bzw. bidirektional ausgebildeten Metallgelegen 4'. Durch die unterschiedliche Orientierung der Metallseile in den Metallgelegen 4 und 4' wird das erzeugte Bauteil in seiner Elastizität optimiert.

In Figur 3 ist beispielhaft ein Verbindungselement 6 vorgesehen. Ein solches Verbindungselement kann zum Beispiel eine Schraube mit einer Unterlegscheibe sein, die im Metallgelege verankert, in der einfachsten Ausführungsform, in das Metallgelege gesteckt wird. Das Integrieren des Verbindungselementes 6 ist von Vorteil, wenn sich das Bauelement im Falle eines Aufpralls nicht vom Fahrzeug lösen soll und die Verbindungselemente noch eine Restverbindung mit dem Fahrzeug herstellen können. Die Art des Verbindungselementes 6 ist dabei für den Fachmann frei zu wählen. Jede Art von Verbindungselement, das dem Fachmann geläufig ist, ist für den erfindungsgemäßen Einsatz möglich.

In Figur 3 ist ein weiteres Bauteil, ein Masseanschluss 7 schematisch angedeutet. Mit einem solchen Masseanschluss 7 wird das Metallseil 4 mit der Masse des Fahrzeugs verbunden.

Für die Herstellung des Metallseils werden Metalldrähte, vorzugsweise Stahldrähte verwendet. Bei der Verwendung von Stahldrähten ist zu berücksichtigen, dass Korrosion an diesen Stahldrähten auftritt, wenn der Stahl mit den Kohlenstofffasern in Verbindung kommt. Um dieses Problem zu minimieren wird, wie in Figur 4 gezeigt, eine Isolationsschicht 5 zwischen Metallseile 4,4', in diesem Fall dem Stahlgelege und den Kohlenstofffaserlagen 3 eingeführt.

Die Isolationsschicht 5 ist in einem Ausführungsbeispiel eine Lage aus Harz oder dem Kunststoff der Kunststoffmatrix, die im Produktionsverfahren eingebracht wird und einen Abstand zwischen dem Stahlgelege und den Kohlenstofffasern herstellt und ausfüllt. Dazu können Abstandshalter auf das Metallgelege aufgebracht werden, um die kohlenstofffaserverstärkte Lage im vorgegebenen Abstand einzubringen und zu halten, bis das Harz oder der Kunststoff den Zwischenraum füllt und die Isolation herstellt.

In einer alternativen Ausführungsform wird die Isolationsschicht 5 aus glasfaserverstärktem Kunststoff hergestellt. Der Vorteil bei der Verwendung von glasfaserverstärktem Kunststoff ist, dass dadurch die Plastizität des Kunststoffverbundes erhöht wird und dem spröden Verhalten der KohlenstoffFaserlagen entgegengewirkt wird. In einer Ausführungsform mit isolierender Glasfaser-Kunststoffschicht kann das Bauteil bei einem Aufprall eher erhalten werden und die Stahleinlagen sind gleichzeitig vor Korrosion geschützt.

Als weitere isolierende Lagen sind auch Materialien wie Zellulose, Basalt und Ähnliches möglich, die eine reine Isolationswirkung aber keinen weiteren Einfluss auf die Elastizität des Materials haben.

Um das Problem mit der Korrosion zu vermeiden werden Metallseile aus Aluminium verwendet, die die Stahlseile ersetzen können.

Zur Herstellung der Verbundmaterialien werden die bekannten Kunststoffmatrizen und Harze verwendet.

## Patentansprüche

1. Kohlenstoffverbundbauteil aus Kunststoff- Karbonfaser- Verbundwerkstoff bestehend aus einzelnen, sich in der Fläche des Bauteils erstreckenden Bereichen (B1, B2, B3), in denen zumindest eine Lage in zumindest einem der Bereiche aus Kohlenstofffasernverbundmaterial (3) besteht und mindestens ein weiterer Bereich eine Lage (4) enthält, die aus Metallseilen besteht, die in mindestens einer Richtung beabstandet zueinander angeordnet sind, wobei auf oder zwischen die Lagen aus Kohlenstofffasernverbundmaterial (3) Lagen (4) aus den Metallseilen angeordnet werden, wobei das Bauteil unterschiedliche Bereiche (B1, B2, B3) aufweist, wobei in einem ersten Bereich (B1) des Bauteils nur Lagen von Kohlenstofffasernverbundmaterial (3) vorhanden sind, wobei in einem zweiten Bereich (B2) das Bauteil zwei Lagen von den Metallseilen aufweist und/oder in einem dritten Bereich (B3) das Bauteil eine Lage von den Metallseilen aufweist;
**dadurch gekennzeichnet, dass** die Metallseile ein bidirektionales Metallgelege (4') bilden.

2. Kohlenstoffverbundbauteil nach Anspruch 1, **dadurch gekennzeichnet, dass** die Metallseile (4,4') aus zueinander verdrillten und/oder geflochtenen Einzeldrähten bestehen

3. Kohlenstoffverbundbauteil nach Anspruch 1, **dadurch gekennzeichnet, dass** die Metallseile aus Stahl bestehen.

4. Kohlenstoffverbundbauteil nach Anspruch 1, **dadurch gekennzeichnet, dass** die Lage der Metallseile sich zwischen oder auf der Lage aus Kohlenstofffasernverbundmaterial (3) befindet.

5. Kohlenstoffverbundbauteil nach Anspruch 1, **dadurch gekennzeichnet, dass** die Metallseile durch mindestens eine Lage aus isolierendem Material (5) von den Kohlestofffasern (3) getrennt ist.

6. Kohlenstoffverbundbauteil nach Anspruch 5, **dadurch gekennzeichnet, dass** das isolierende Material (5) eine Lage des Kunststoffs der Kunststoffverbundmatrix ist.

7. Kohlenstoffverbundbauteil nach Anspruch 5, **dadurch gekennzeichnet, dass** das isolierende Material (5) ein glasfaserverstärkter Kunststoff bzw. eine Glasfaser ist.

8. Kohlenstoffverbundbauteil nach Anspruch 7, **dadurch gekennzeichnet, dass** die Glasfasern als isolierende Abstandshalter zwischen mindestens einer Lage von Metallseilen und der Lage des Kohlenstofffasernverbundmaterials (3) dienen.

## Claims

1. Carbon composite component composed of a plastics - carbon-fibre composite material, made up of individual regions (Bl, B2, B3) extending in the plane of the component, wherein at least one ply is composed, in at least one of the regions, of carbon fibre composite material (3), and at least one further region comprises a ply (4) which is composed of metal cords which are arranged spaced apart from one another in at least one direction, wherein plies (4) composed of the metal cords are arranged on or between the plies of carbon fibre composite material (3), wherein the component has different regions (Bl, B2, B3), wherein only plies of carbon fibre composite material (3) are provided in a first region (B1) of the component, wherein, in a second region (B2), the component has two plies of the metal cords, and/or, in a third region (B3), the component has one ply of the metal cords; **characterized in that** the metal cords form a bidirectional metal laid fabric (4').

2. Carbon composite component according to Claim 1, **characterized in that** the metal cords (4, 4') are composed of individual wires which are twisted and/or braided with one another.

3. Carbon composite component according to Claim 1, **characterized in that** the metal cords are composed of steel.

4. Carbon composite component according to Claim 1, **characterized in that** the ply of metal cords is situated between or on the ply composed of carbon fibre composite material (3).

5. Carbon composite component according to Claim 1, **characterized in that** the metal cords are separated from the carbon fibres (3) by at least one ply of insulating material (5).

6. Carbon composite component according to Claim 5, **characterized in that** the insulating material (5) is a ply of the plastic of the plastics composite matrix.

7. Carbon composite component according to Claim 5, **characterized in that** the insulating material (5) is a glass-fibre-reinforced plastic or a glass fibre.

8. Carbon composite component according to Claim 7, **characterized in that** the glass fibres serve as insulating spacers between at least one ply of metal cords and the ply of the carbon fibre composite material (3).

## Revendications

1. Composant composite en carbone, en un matériau composite plastique-fibres de carbone constitué par des zones individuelles (Bl, B2, B3) qui s'étendent dans la surface du composant, au moins une couche dans au moins une des zones étant constituée par un matériau composite de fibres de carbone (3), et au moins une autre zone contenant une couche (4), qui est constituée par des câbles métalliques, qui sont agencés espacés les uns des autres dans au moins une direction, des couches (4) des câbles métalliques étant agencées sur ou entre les couches de matériau composite de fibres de carbone (3), le composant comprenant différentes zones (Bl, B2, B3), uniquement des couches de matériau composite de fibres de carbone (3) étant présentes dans une première zone (B1) du composant, le composant comprenant deux couches des câbles métalliques dans une deuxième zone (B2) et/ou le composant comprenant une couche des câbles métalliques dans une troisième zone (B3) ;
**caractérisé en ce que** les câbles métalliques forment un non-tissé métallique bidirectionnel (4').

2. Composant composite en carbone selon la revendication 1, **caractérisé en ce que** les câbles métalliques (4, 4') sont constitués par des fils individuels torsadés et/ou tressés les uns avec les autres.

3. Composant composite en carbone selon la revendication 1, **caractérisé en ce que** les câbles métalliques sont constitués par de l'acier.

4. Composant composite en carbone selon la revendication 1, **caractérisé en ce que** la couche des câbles métalliques se trouve entre ou sur la couche de matériau composite de fibres de carbone (3).

5. Composant composite en carbone selon la revendication 1, **caractérisé en ce que** les câbles métalliques sont séparés des fibres de carbone (3) par au moins une couche de matériau isolant (5).

6. Composant composite en carbone selon la revendication 5, **caractérisé en ce que** le matériau isolant (5) est une couche du plastique de la matrice du composite de plastique.

7. Composant composite en carbone selon la revendication 5, **caractérisé en ce que** le matériau isolant (5) est un plastique renforcé par des fibres de verre ou une fibre de verre.

8. Composant composite en carbone selon la revendication 7, **caractérisé en ce que** les fibres de verre servent d'espaceurs isolants entre au moins une couche de câbles métalliques et la couche du matériau composite de fibres de carbone (3).
